# FASCICULE DE BREVET EUROPEEN

(11) **EP 1 563 157 B1**
(45) Date de publication et mention de la délivrance du brevet: **15.02.2012**
(21) Numéro de dépôt: 03758240.0
(22) Date de dépôt: 13.08.2003
(51) Int. Cl.: E05F 11/38

(54) **PROCEDE POUR LA FABRICATION D'UN VITRAGE DEPLACABLE POUR VEHICULE ET VITRAGE DEPLACABLE EN HAUTEUR POUR VEHICULE**
VERFAHREN ZUR HERSTELLUNG VON EINER BEWEGBAREN SCHEIBE EINES KRAFTFAHRZEUGFENSTERS UND SENKRECHT BEWEGBARE SCHEIBE EINES KRAFTFAHRZEUGFENSTERS
METHOD FOR MAKING A MOVABLE WINDOW PANE FOR A VEHICLE AND VERTICALLY MOVABLE WINDOW PANE MOBILE FOR VEHICLE

(30) Priorité: 17.08.2002 DE 10237756
(43) Date de publication de la demande: 17.08.2005
(73) Titulaire: SAINT-GOBAIN GLASS FRANCE, 92400 Courbevoie (FR)
(72) Inventeur: KÖTTE, Rolf, 52477 Alsdorf (DE); HARTL, Karl, A-8045 Graz (AT)
(74) Mandataire: Jamet, Vincent
(86) Numéro de dépôt international: PCT/FR2003/002535
(87) Numéro de publication internationale: WO 2004/016894

(56) Documents cités:
- EP-A- 0 294 254
- WO-A-01/98613
- DE-A- 19 627 398
- US-B1- 6 349 504

## Description

La présente invention concerne un procédé pour la fabrication d'un vitrage pour véhicule déplaçable en hauteur, en particulier pour une portière de véhicule sans cadre, avec un vitrage transparent, sur le bord de laquelle une pièce de soutien peut être fixée ou est fixée, qui coopère avec un dispositif d'entraînement et/ou de guidage pour le déplacement en hauteur du vitrage. L'invention se rapporte également à un tel vitrage déplaçable en hauteur pour véhicule.

Les vitrages pour véhicule déplaçables en hauteur du type précité, qui sont incorporés dans des portières qui ne comportent pas de cadre ou pas de guide au-dessus du bord de la portière, et qui ne sont par conséquent guidés que par un mécanisme approprié à l'intérieur du corps de la portière, sont utilisées principalement dans des voitures de sport, des coupés ou des cabriolets. Le vitrage doit, à la fermeture, s'engager exactement dans la garniture supérieure ou s'appliquer contre celle-ci. Les garnitures peuvent avoir la forme d'un canal et entourer le vitrage des deux côtés, la plupart du temps il n'est cependant prévu une garniture plate que sur un seul côté, contre laquelle le vitrage doit s'appliquer avec une pression suffisante le long du bord (arête de fermeture) de sa face principale considérée. Toutefois, si le positionnement n'est pas suffisamment exact dans la position de fermeture du vitrage, il peut alors survenir des difficultés pour la fermeture de la portière ou du vitrage ou même des défauts d'étanchéité. D'une part, le vitrage peut notamment se voiler ou d'autre part, il peut apparaître une fente entre la garniture et l'arête du vitrage.

En règle générale, on utilise pour de tels vitrages pour véhicule déplaçables en hauteur des vitrages de verre bombés et trempés, dont certaines tolérances de flexion, imposées par la fabrication, c'est-à-dire des écarts par rapport à sa forme de vitrage idéale, doivent être acceptées. Ce n'est qu'avec un alignement aussi précis que possible entre le guidage de vitrage restant à l'intérieur du corps de la portière et le vitrage que les tolérances de flexion inévitables du vitrage peuvent être compensées et que l'étanchéité désirée peut être assurée.

Par la demande de brevet allemand DE 44 35 008 A1, on connaît un dispositif de réglage pour un vitrage de portière d'un véhicule automobile coopérant avec un dispositif de levage de vitrage, de préférence formé ou guidé sans cadre, qui comprend au moins un rail de guidage vertical du dispositif de levage du vitrage, placé à l'intérieur du corps de portière, dans lequel le rail de guidage peut pivoter dans le sens transversal du véhicule autour d'un point de rotation supérieur et peut être calé dans une position prédéterminée par un dispositif de réglage attaché dans la région inférieure du rail de guidage. Le dispositif de réglage est accessible par la face inférieure du corps de portière, de telle manière qu'un ajustage du vitrage de portière soit possible sans démontage du garnissage de la portière.

Par le document DE 199 43 619 A1, on connaît un dispositif de déplacement pour le vitrage d'une portière de véhicule sans cadre, dans lequel un organe d'entraînement est réglable dans un rail de guidage vertical. Le vitrage est relié à l'organe d'entraînement. Pour le réglage de la contrainte initiale, avec laquelle le vitrage est appliqué contre la garniture en caoutchouc de l'ouverture de portière du véhicule, celle-ci peut pivoter dans le plan transversal du véhicule. A cet effet, son arête inférieure est couplée à un boulon de déplacement traversant verticalement l'organe d'entraînement, dont l'extrémité de couplage est excentrique par rapport à l'axe de rotation du boulon de déplacement et qui déplace le vitrage en faisant tourner le boulon de déplacement dans le sens transversal. Le boulon de déplacement peut être actionné à travers une ouverture dans la face inférieure de la portière.

Les solutions connues pour le réglage des vitrages pour véhicule déplaçables en hauteur par rapport à la garniture de la portière, en particulier dans la région supérieure de celle-ci, présentent l'inconvénient qu'elles actionnent des dispositifs relativement compliqués, qui provoquent une inclinaison transversale du vitrage. Par ailleurs, il faut en général plusieurs essais de réglage pour obtenir l'effet désiré, parce que l'opération de réglage est effectuée lorsque le vitrage est abaissé. Il n'est dès lors pas possible de constater immédiatement si l'opération de réglage a réussi, parce que le vitrage doit à nouveau être ramené dans sa position haute pour le vérifier.

Le document DE 196 27 398 A1 décrit un vitrage pour véhicule déplaçable en hauteur avec une pièce de soutien du type mentionné dans l'introduction, qui se compose d'un polymère résistant à un effort mécanique et de préférence collé directement sur le vitrage, dans laquelle il est prévu, entre la pièce de soutien et son articulation sur le mécanisme de levage, une pièce intermédiaire élastique destinée à compenser les tolérances de montage et de fabrication. Cette description ne s'attaque cependant pas au problème de l'appui du vitrage contre la garniture en position fermée.

Il est par ailleurs également connu (DE 41 23 256 C1, DE 198 37 348 A1) ou WO 01/98613, notamment lors du formage de garnitures de bord en plastique sur des vitrages pour véhicule, de former ou de façonner les pièces de plastique in situ à l'aide d'outils automatiques liés au dispositif.

Avec la présente invention, on cherche à obtenir que vitrage pour véhicule solidement attaché à la pièce de soutien s'applique de façon sûre sur sa garniture en position fermée, et que le mécanisme de levage avec la pièce de soutien qui y est couplée puisse être placé à l'intérieur du corps de portière sans travaux de réglage importants, dans une position de montage reproductible avec de faibles écarts dimensionnels dans le cadre d'une fabrication en série.

Par vitrage pour véhicule au sens de l'invention, il faut entendre substrat verrier ou de plastique ainsi qu'un feuilleté de substrats verriers et/ou de plastique. Usuellement, de tels feuilletés sont fabriqués en assemblant les unes aux autres plusieurs substrats solides avec interposition d'une feuille thermoplastique adhésive. Il peut cependant aussi y avoir un seul substrat solide assemblé à une feuille de fonction ou une feuille de fonction ajoutée dans le feuilleté.

L'invention à dès lors pour objet de présenter un procédé pour la fabrication d'un vitrage déplaçable en hauteur de véhicule, qui à l'état fermé peut être appliqué contre sa garniture sans travaux et/ou dispositifs de réglage compliqués et avec la contrainte initiale désirée. Il conviendra également de proposer des vitrages de véhicule déplaçables en hauteur correspondantes pour des portières de véhicule sans cadre.

Conformément à l'invention, ce problème est résolu par les caractéristiques de la revendication de procédé 1 ainsi que de la revendication de produit associée 8. Les revendications dépendantes respectives contiennent d'autres caractéristiques, qui complètent l'invention de manière avantageuse.

Conformément à l'invention, les écarts dimensionnels dus au bombage du vitrage à l'intérieur de l'interface ou de la région d'assemblage entre la pièce de soutien et le vitrage sont compensés. Le vitrage est assemblé à la pièce de soutien, respectivement il est adapté dans celle-ci, de telle manière que cette dernière puisse d'une part être montée sans difficulté dans le mécanisme de levage préassemblé dans le corps de portière, et d'autre part amener le vitrage de façon sûre dans sa position de fermeture.

Cette compensation des tolérances est obtenue, conformément à l'invention, à l'aide d'une pièce façonnée, qui est formée in situ sur le vitrage fixé à l'aide de plusieurs points de surface prédéterminés dans une position spatiale indépendante de la position et de la configuration réelles du vitrage dans la région d'assemblage; elle présente de ce fait une configuration adaptée individuellement à chaque vitrage.

En termes encore plus précis, lesdits points de la surface du vitrage sont posés sur des points d'appui fixes d'un dispositif ou d'un gabarit adapté à chaque forme de vitrage, ladite pièce façonnée étant ensuite produite pour la fixation de la pièce de soutien à l'aide d'au moins un outil approprié dans une position et une orientation spatiales clairement définies par rapport aux points d'appui, c'est-à-dire qu'elle se trouve toujours dans la même position à l'intérieur du dispositif ou dans le système de coordonnées de celui-ci.

Selon le cas d'application, il peut être prévu différents outils pour la pose du plastique et pour le façonnage de la masse, dans lesquels l'outil de façonnage doit dans chaque cas assurer la haute précision du positionnement de la pièce façonnée ou de ses faces d'appui pour la pièce de soutien. Il peut cependant aussi n'être prévu qu'un seul outil aussi bien pour la pose que pour le façonnage de la masse de plastique.

Ledit dispositif ou gabarit doit être considéré comme un modèle 1:1 de l'espace de montage (portière de véhicule), avec lequel la position de fermeture du vitrage réelle peut être simulée et son assemblage avec la pièce de soutien guidée en mouvement avec des tolérances très serrées dans la portière de véhicule peut être réalisé correctement pour chaque vitrage individuel. On assure ainsi que la pièce de soutien est en mesure de guider le vitrage vers la garniture, dans tous les cas en position correcte dans sa position de fermeture dans la portière réelle. Au total, on obtient un alignement exact de l'arête supérieure du vitrage par rapport à la garniture d'étanchéité de la carrosserie déjà lors de l'assemblage avec l'unité de guidage ou d'entraînement. Cette dernière ne doit plus être pourvue de dispositifs d'ajustage. Naturellement, les écarts dimensionnels précités des vitrages doivent se situer dans certaines limites admissibles, de telle manière que tous les vitrages puissent être fabriqués avec des valeurs limites admissibles par un seul dispositif.

Lors de la mise en oeuvre du procédé conforme à l'invention, le vitrage est placé dans le dispositif de telle manière qu'il repose sur plusieurs, de préférence sur trois points d'une de ses faces principales, tandis que sa face, respectivement son arête périphérique est posée contre des butées fixes. En position de montage réelle, les points d'appui précités correspondent à des points de contact du vitrage avec la portière de véhicule ou de la carrosserie. Après la fixation du vitrage, la pièce façonnée peut être formée en déposant dans la région de placement de la pièce de soutien sur la surface du vitrage une matière plastique durcissable sous forme pâteuse, qui est ensuite mise en forme avec la structure superficielle désirée à l'aide d'un outil de gaufrage ou de formage.

Si deux des (trois) points prédéterminés se trouvent dans la région de l'arête supérieure du vitrage, respectivement de son arête d'étanchéité, donc dans la région importante pour l'application du vitrage contre la garniture de « fenêtre » de la carrosserie, et que le troisième point se trouve à proximité de la pièce de soutien, l'inclinaison latérale du vitrage et la position de l'arête supérieure du vitrage par rapport à la pièce de soutien sont prédéterminées. Les points représentent un plan de référence, qui est indépendant de la structure bombée du vitrage entre ceux-ci. Avec un tel vitrage, l'orientation de la pièce de soutien est en particulier indépendante de la courbure locale du vitrage (tangente d'extrémité) dans la région de la pièce de soutien.

La position ainsi que la position finale de la face de l'outil de formage venant en contact avec le plastique sont naturellement alignées par rapport aux points prédéterminés en fonction des coordonnées de montage dans la portière correspondante. Cet alignement est effectué de façon particulièrement simple et efficace, lorsque l'outil de formage et les points d'appui pour le vitrage sont disposés sur un seul dispositif approprié.

La pièce façonnée alignée est de préférence fabriquée en une matière déformable de façon plastique, par exemple un polymère. Ce polymère peut être un plastique pâteux, qui est façonné selon l'orientation de position désirée et qui est ensuite durci. En cas d'utilisation d'une matière plastique à deux ou plusieurs composants, celle-ci durcit après un certain temps de réaction. On peut aussi utiliser des plastiques qui réagissent avec l'humidité de l'air ou qui durcissent sous l'influence d'un rayonnement électromagnétique, par exemple un rayonnement ultraviolet.

On peut aussi employer des matières plastiques à déformation thermoplastique, qui sont chauffées pour le formage et ont une forme stable après leur refroidissement. Leurs températures de ramollissement doivent bien entendu être supérieures aux températures atteintes pendant le fonctionnement du véhicule.

Après le durcissement du plastique, la pièce façonnée est préparée pour la suite du montage.

Il serait en principe possible, avec le procédé conforme à l'invention, de fabriquer pour chaque vitrage une pièce façonnée adaptée individuellement à sa courbure, qui n'adhère pas au vitrage et qui sert de "couche intermédiaire" libre pour un montage ultérieur commun avec la pièce de soutien. De préférence, la pièce façonnée adhère cependant directement au vitrage, de manière à constituer une unité comprenant le vitrage et la pièce de soutien. Suivant une variante avantageuse, elle constitue sur le vitrage une face de référence ou d'appui correctement orientée dans la région de l'assemblage entre le vitrage et la pièce de soutien, qui coopère avec une face opposée correspondante de la pièce de soutien.

Le vitrage déplaçable en hauteur pour véhicule conforme à l'invention se caractérise en ce que la pièce de soutien solidement assemblée au vitrage, qui coopère avec le dispositif d'entraînement et/ou de guidage ou qui en fait partie, est déjà alignée de façon définie par rapport à plusieurs points déterminés, de préférence à trois points déterminés de la surface du vitrage, avant qu'elle soit assemblée au dispositif d'entraînement et/ou de guidage à l'intérieur de la portière de véhicule.

La face d'appui de la pièce façonnée peut posséder une surface de forme plane, cylindrique ou cintrée en sphère ou être pourvue de structures déterminées. Naturellement, des faces d'appui planes sont particulièrement simples à fabriquer. Dans tous les cas, la face d'appui et la face d'appui opposée de la pièce de soutien doivent se correspondre aussi exactement que possible, afin d'obtenir une pose ajustée et sans.jeu.

Si la pièce de soutien doit être utilisée comme élément d'assemblage avec deux mâchoires de serrage pour un couplage du vitrage avec le dispositif d'entraînement ou de guidage, il peut être intéressant de prévoir des pièces de soutien, respectivement des faces d'appui orientées conformément à l'invention, sur la surface avant et sur la surface arrière du vitrage dans la région des mâchoires de serrage de la pièce de soutien. Le montage de l'élément d'assemblage est alors particulièrement simple, parce que les pièces individuelles ne doivent être placées que sur les faces d'appui préparées et ne peuvent pas se déformer l'une par rapport à l'autre. Puisque la pièce façonnée intercalaire, propre au vitrage, correspond exactement à la forme, respectivement à la structure du vitrage, dans la région d'assemblage, on peut appliquer des efforts de serrage relativement importants sur le vitrage, sans que l'on doive employer une couche intermédiaire élastique ou même que l'on déforme le vitrage.

La pièce de soutien, qui se compose par exemple d'un métal ou d'un plastique dur, doit bien entendu être assemblée d'une façon appropriée à la face d'appui ou au vitrage, par exemple au moyen d'un assemblage collé. Un autre assemblage, non adhésif, entre la pièce de soutien et la pièce façonnée, peut être réalisé en munissant les pièces de soutien venant en contact avec les faces d'appui d'une tige filetée saillante ou d'un alésage fileté interne. On peut également imaginer toute autre possibilité connue, à côté d'un assemblage par des pinces ou des clips, on peut encore mentionner le vissage direct dans la matière de la face d'appui. Un mode d'assemblage particulièrement simple peut être obtenu lorsque le vitrage et la face d'appui sont pourvues d'un alésage, qui est traversé par un boulon avec ou sans filet. Si la pièce de soutien est formée d'un seul tenant, elle doit également être pourvue d'un alésage adapté, qui est alors également traversé par le boulon.

Si l'on utilise pour la face d'appui une matière plastique, qui peut adhérer aussi bien à la pièce de soutien qu'au vitrage, on peut alors fabriquer dans le dispositif un module complet composé du vitrage avec une face d'appui et d'une pièce de soutien, ce qui supprime les opérations supplémentaires ultérieures de fixation de la pièce de soutien. Dans ce cas, on utilise pour la fabrication du vitrage pour véhicule déplaçable en hauteur un dispositif avec un outil de formage, qui peut recevoir la pièce de soutien et la placer directement dans sa position définitive sur la matière plastique déposée encore pâteuse, respectivement poisseuse.

Suivant une variante de celle-ci, on place d'abord la pièce de soutien dans sa position définitive par rapport au vitrage et on remplit ensuite l'espace intermédiaire restant entre la face ou le corps du vitrage et la pièce de soutien avec la matière plastique, pour réaliser la pièce façonnée. En l'espèce, la pièce de soutien est en fait une partie du moule destiné à la pièce façonnée.

Naturellement, on peut aussi combiner des moyens d'assemblage adhésifs et mécaniques entre la pièce de soutien, le vitrage et la pièce façonnée.

Une fois que la matière plastique s'est durcie, le vitrage et la pièce de soutien forment une unité, dans laquelle la pièce façonnée propre au vitrage est intercalée comme pièce de liaison ou adaptateur.

Dans toutes ces variantes, l'assemblage entre la pièce de soutien et le vitrage est suffisamment solide pour pouvoir transmettre une certaine contrainte initiale du vitrage sur des faces de guidage latérales et les garnitures du vitrage, qui est introduite par la pièce de soutien, respectivement le mécanisme de levage.

Parmi les procédés pour fabriquer de telles pièces façonnées, on peut citer en soi les procédés par injection, comme par exemple le procédé de moulage par injection, et le procédé par extrusion avec un banc de formage ou le formage ultérieur. On fera remarquer que la pièce façonnée n'est pas visible à l'état monté, de telle manière qu'elle doit certes respecter les dimensions, mais qu'elle ne doit pas absolument respecter des critères esthétiques sévères.

D'autres détails et avantages de l'objet de l'invention seront visibles dans les dessins d'un exemple de réalisation et dans leur description détaillée qui suit.

Dans les représentations simplifiées et ne respectant pas d'échelle particulière, la
- Fig. 1: montre un vitrage déplaçable en hauteur pour véhicule avec une pièce de soutien fixée sur celle-ci; et la
- Fig. 2: présente une vue en coupe de ce même vitrage pour véhicule le long de la ligne II-II de la figure 1.

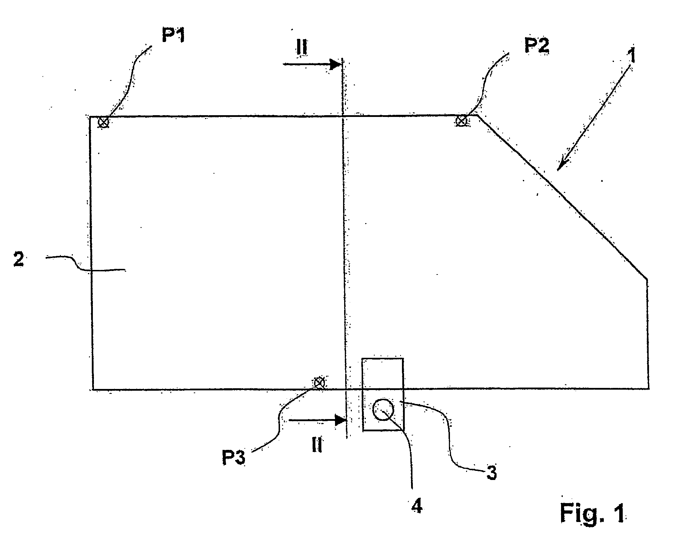

Suivant la figure 1, un vitrage pour véhicule 1 servant de vitrage déplaçable en hauteur pour un véhicule automobile (dans la portière du conducteur ou du passager) se compose d'une vitre de verre 2 transparente, courbée en cylindre dans le plan du dessin, et d'une pièce de soutien 3 fixée au bord inférieur de celle-ci, qui est pourvue d'un trou de passage 4. Ce dernier est destiné à recevoir un boulon ou une vis, avec lequel/laquelle le vitrage pour véhicule 1 est assemblé à un mécanisme de levage. Le boulon, respectivement la vis et le mécanisme de levage ne sont pas représentés ici, par souci de simplicité, de même que les autres éléments de montage situés autour du vitrage pour véhicule.

Sur la surface (à courbure concave) de la vitre de verre 2 tournée vers l'intérieur du véhicule, se trouvent trois points prédéterminés P1, P2 et P3, sur lesquels la pièce de soutien 3 est alignée d'une façon définie, comme cela a été décrit plus haut. Les points P1 et P2 sont disposés sur l'arête supérieure (arête d'étanchéité) de la vitre de verre 2, le point P3 se trouve sur l'arête inférieure de la vitre de verre 2 à proximité de la pièce de soutien 3.

La plus courte arête latérale (à droite) de la vitre de verre 2 en forme de trapèze est, en position montée, tournée vers une colonne A d'un véhicule, la plus longue arête latérale (à gauche) est tournée vers une colonne B. En règle générale, les vitrages sont encore guidés au moins sur un côté (sur la face principale intérieure) par des baguettes d'étanchéité, en position fermée de la portière. La pièce de soutien et le mécanisme de levage exercent une certaine contrainte initiale statique par la vitre de verre 2 sur ces baguettes de guidage et d'étanchéité.

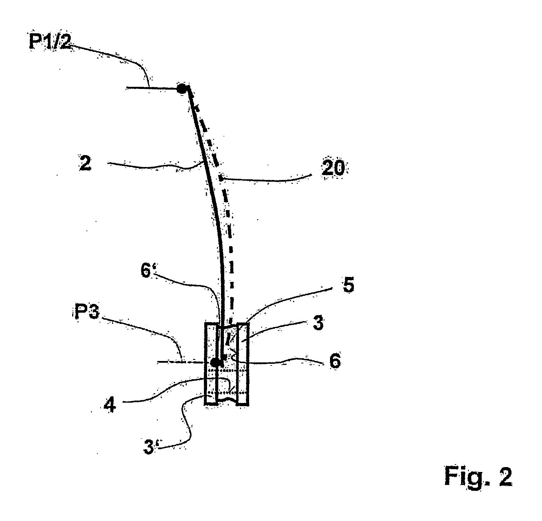

La figure 2 montre qu'une pièce façonnée 5 est disposée à proximité du point P3 (indiqué par un trait mixte) dans la région de la pièce de soutien 3, sur la face principale de la vitre de verre 2 tournée vers l'extérieur du véhicule et présentant une courbure convexe uniaxiale, entre celle-ci et la pièce de soutien 3. La pièce façonnée 5 se compose d'une matière plastique, de préférence d'un thermoplastique, et elle est façonnée directement sur la vitre de verre 2, mais elle s'étend également au-delà du bord de celle-ci. Au besoin, on applique d'abord un primaire approprié sur la surface du vitrage pour augmenter l'adhérence entre le plastique et la vitre de verre 2, avant que le plastique soit façonné.

Le trou 4 se situe certes ici à l'extérieur du périmètre de la vitre 2, il ne traverse donc pas celle-ci. Dans d'autres formes de réalisation, il peut cependant être prévu également un ou plusieurs trous dans la vitre elle-même à proximité du bord, avec une adaptation des positions des trous correspondants dans la pièce de soutien et dans la pièce façonnée.

La face de limitation de la pièce façonnée 5, située à l'opposé de la vitre de verre 2, a la forme d'une face d'appui 6 pour la pièce de soutien 3, avec laquelle cette dernière est assemblée en utilisant un adhésif à haute résistance adéquat. Il est cependant possible également, au choix, comme on l'a déjà mentionné plus haut, d'assembler la pièce de soutien 3 directement, donc sans utilisation d'un adhésif distinct, à la matière thermoplastique de la pièce façonnée (avant son durcissement), le plastique thermoplastique (par exemple un polyuréthanne ou un élastomère thermoplastique) formant alors lui-même l'adhésif.

La face d'appui 6 a été, à l'aide d'un dispositif approprié, orientée par rapport aux points P1, P2 et P3 en une masse de plastique déposée d'abord sans forme par déplacement et enlèvement de la matière excédentaire, de telle manière que son orientation dans l'espace ne dépende que des points prédéterminés P1, P2 et P3 de la vitre de verre 2, respectivement du dispositif. En l'espèce, les points P1 et P2 représentent la face d'étanchéité supérieure dans la position fermée du vitrage. La position de la face d'appui 6 dans l'espace est donc indépendante de la courbure locale du vitrage dans la région de la pièce de soutien 3. Ce fait est illustré par la représentation en traits interrompus d'une autre vitre de verre 20 présentant une autre courbure. Bien que la courbure de la vitre de verre 20 s'écarte de la courbure "idéale" de la vitre de verre 2 (exagérément fort dans le dessin), l'arête supérieure (P2) du vitrage et la pièce de soutien 3 se trouvent chaque fois dans la même position l'une par rapport à l'autre. De même, les trois points d'appui coïncident dans les deux vitres indépendamment de leurs courbures différentes. La pièce façonnée 5 doit par conséquent être considérée comme un adaptateur (propre à chaque vitre).

On voit en particulier que la position angulaire de la pièce de soutien 3 est indépendante par rapport à la tangente d'extrémité de l'arête inférieure du vitrage, respectivement de l'orientation des faces principales des vitres 2 ou 20 dans la région d'assemblage entre le vitrage et la pièce de soutien. Si la pièce de soutien devait au contraire, suivant l'état de la technique, être fixée directement sur le vitrage, il apparaîtrait alors, en fonction des rayons de courbure de celui-ci, des orientations angulaires très différentes, qui rendraient difficile l'application correcte de l'arête supérieure du vitrage (points P1 et P2) sur la garniture et qui ne pourraient être compensées que par un réglage mécanique très coûteux à l'intérieur du mécanisme de levage.

Une pièce façonnée-adaptateur peut également, comme cela est représenté dans la figure 2, être disposée en plus sur la surface des vitres de verre 2 ou 20 à courbure concave tournée vers l'intérieur du véhicule. Dans le présent exemple de réalisation, la pièce façonnée 5 comprend d'un seul tenant l'arête (inférieure) des vitres 2 ou 20 et s'applique également sur la région de bord de la face principale intérieure des vitres 2 ou 20. On peut ainsi réaliser une autre face d'appui 6' alignée sur les points prédéterminés P1, P2 et P3, qui sert alors à positionner une pièce de soutien supplémentaire 3'. Une telle disposition présente l'avantage que l'on peut appliquer des efforts de serrage relativement élevés pour fixer la vitre de verre 2 ou 20, parce que la vitre de verre elle-même est protégée contre une sollicitation inacceptable par la pièce façonnée 5.

## Revendications

1. Procédé pour la fabrication d'un vitrage déplaçable en hauteur pour véhicule (1), avec un vitrage transparent, en particulier courbe (2), sur le bord duquel une pièce de soutien (3, 3') doit être fixée, qui coopère avec un dispositif d'entraînement et/ou de guidage pour le déplacement en hauteur de la vitre (2), **caractérisé par** les étapes suivantes:
- le vitrage (2) est orienté et fixé sur plusieurs points prédéterminés (P1, P2, P3) de sa surface dans un dispositif adapté à sa forme,
- une matière plastique durcissable est déposée sur le virage à l'aide d'au moins un outil dans la région de l'assemblage avec la pièce de soutien et elle est façonnée, dans une position fixe dans l'espace à l'intérieur du dispositif adapté à la forme du vitrage, en une pièce façonnée (5) qui est formée in situ et qui, après son assemblage avec le vitrage (2), définit clairement la position de la pièce de soutien par rapport aux points prédéterminés (P1, P2, P3),
- la matière plastique est durcie,
la pièce de soutien (3; 3') étant formée par au moins une pièce supplémentaire, qui est fixée sur la pièce façonnée (5) dans une position prédéterminée par au moins une face d'appui (6; 6') façonnée sur celle-ci, cette fixation étant également réalisée dans le dispositif adapté à la forme du vitrage.

2. Procédé suivant la revendication 1, **caractérisé en ce que** la pièce façonnée est mise en forme sans adhérence avec le vitrage et est ensuite fermement assemblée au vitrage au même endroit.

3. Procédé suivant la revendication 1, **caractérisé en ce que** la pièce façonnée est mise en forme en adhérant fermement au vitrage.

4. Procédé suivant la revendication 1, **caractérisé en ce que** la pièce de soutien constituant la pièce supplémentaire est utilisée comme partie du moule utilisé pour mettre en forme la pièce façonnée, en pressant la pièce de soutien pour le formage sur la masse de plastique constituant la pièce façonnée.

5. Procédé suivant la revendication 1, **caractérisé en ce que** la pièce de soutien constituant la pièce supplémentaire est utilisée comme partie du moule utilisé pour mettre en forme la pièce façonnée, en la fixant d'abord dans une position spatiale prédéterminée à l'intérieur du dispositif et en remplissant ensuite avec la masse plastique un espace intermédiaire existant dans la région d'assemblage entre la pièce de soutien mise en place et la surface du vitrage.

6. Procédé suivant l'une quelconque des revendications précédentes, **caractérisé en ce que** la pièce de soutien est assemblée à la pièce façonnée par collage, soit par un adhésif déposé en plus soit.par adhérence directe entre la pièce façonnée et la pièce de soutien.

7. Procédé suivant l'une quelconque des revendications précédentes, **caractérisé en ce que** la pièce de soutien est assemblée à la pièce façonnée à l'aide de moyens d'assemblage mécaniques, en particulier par serrage et/ou emboîtement.

8. Vitrage déplaçable en hauteur pour véhicule (1), en particulier pour une portière de véhicule avec un guidage de vitrage sans cadre, avec un vitrage transparent (2), en particulier courbe, sur le bord inférieur duquel est fixée une pièce de soutien (3, 3') qui coopère avec un dispositif d'entraînement et/ou de guidage, **caractérisé en ce que** la position spatiale de la pièce de soutien fixée (3, 3') est orientée par rapport à la vitre (2; 20) à l'aide d'une pièce façonnée (5) formée in situ sur le vitrage, sur plusieurs points prédéterminés (P1, P2, P3), dont au moins deux sont situés sur une arête de fermeture du vitrage et **en ce que** la pièce façonnée (5) présente une face d'appui (6, 6') orientée par rapport à plusieurs points prédéterminés (P1, P2, P3) de sa surface, pour le positionnement de la pièce de soutien (3).

9. Vitrage pour véhicule suivant la revendication 8, **caractérisé en ce que** deux des points prédéterminés (P1, P2) se trouvent dans la région de l'arête supérieure de la vitre (2) coopérant avec une garniture et un autre point (P3) est disposé à proximité de la pièce façonnée (5) mise en place.

10. Vitrage pour véhicule suivant l'une quelconque des précédentes revendications 8 ou 9, **caractérisé en ce que** la pièce façonnée (5) se compose d'une matière plastique durcissable ou thermoplastique.

11. Vitrage pour véhicule suivant l'une quelconque des précédentes revendications 8-10, **caractérisé en ce qu'**il est prévu dans la région de la pièce de soutien (3, 3') des faces d'appui (6, 6') orientées de la pièce façonnée (5), sur les deux faces principales opposées de la vitre (2).

12. Vitrage pour véhicule suivant l'une quelconque des précédentes revendications 8-11, **caractérisé en ce que** la pièce de soutien (3, 3') est pourvue d'un trou fileté ou d'une tige filetée pour l'assemblage à un dispositif d'entraînement ou de guidage.

13. Vitrage pour véhicule suivant l'une quelconque des précédentes revendications 8-12, **caractérisé en ce que** le vitrage (2), la face d'appui (6, 6') et éventuellement la pièce de soutien (3, 3') sont respectivement pourvus d'au moins un évidement (4), les évidements alignés l'un avec l'autre étant traversés par un boulon ou une vis pour l'assemblage avec un dispositif d'entraînement ou de guidage.

## Claims

1. A method for the fabrication of a vehicle drop glass (1), with a transparent, in particular curved, pane (2), on the extremity of which a support part (3, 3') is to be attached, which cooperates with a drive and/or guide device for the heightwise movement of the pane (2), **characterized by** the following steps:
- the pane (2) is oriented and attached at several predetermined points (P1, P2, P3) of its surface in a device adapted to its shape,
- a curable plastic material is deposited on the pane with the aid of at least one tool in the region of the assembly with the support part and is fashioned, in a fixed position in the space inside the device adapted to the shape of the pane, into a fashioned part (5) which is formed in situ and which, after its assembly with the pane (2), clearly defines the position of the support part in relation to the predetermined points (P1, P2, P3),
- the plastic material is cured,
the support part (3; 3') being made of at least one additional part, which is attached to the fashioned part (5) in a predetermined position by at least one contact face (6; 6') fashioned on the latter, this attachement being realized in the device adapted to the shape of the pane.

2. The method as claimed in claim 1, **characterized in that** the fashioned part is shaped without bonding with the pane and is then firmly assembled to the pane in the same position.

3. The method as claimed in claim 1, **characterized in that** the fashioned part is shaped while bonding firmly to the pane.

4. The method as claimed in claim 1, **characterized in that** the support part constituting the additional part is used as a portion of the mold used to shape the fashioned part, by pressing the support part for shaping onto the mass of plastic material constituting the fashioned part.

5. The method as claimed in claim 1, **characterized in that** the support part constituting the additional part is used as a portion of the mold used to shape the fashioned part, by first attaching it in a predetermined spatial position inside the device and by subsequently filling with the plastic mass an intermediate space that exists in the region of assembly between the support part put in place and the surface of the pane.

6. The method as claimed in any one of the preceding claims, **characterized in that** the support part is assembled to the fashioned part by bonding, either with an adhesive deposited in addition or by direct adhesion between the fashioned part and the support part.

7. The method as claimed in any one of the preceding claims, **characterized in that** the support part is assembled to the fashioned part with the aid of mechanical assembly means, in particular by clamping and/or interlocking.

8. A vehicle drop glass (1), in particular for a vehicle door with a frameless pane guide, with transparent, in particular curved, pane (2) on the bottom extremity of which is attached a support part (3, 3') which cooperates with a drive and/or guide device, **characterized in that** the spatial position of the fixed support part (3, 3') is oriented in relation to the window (2; 20) with the aid of a fashioned part (5) formed in situ on the pane, at several predetermined points (P1, P2, P3), at least two of which are situated on an edge of closure of the pane and **in that** the fashioned part (5) presents a contact face (6, 6') oriented in relation to several predetermined points (P1, P2, P3) of its surface, for the positioning of the support part (3).

9. The vehicle window pane as claimed in claim 8, **characterized in that** two of the predetermined points (P1, P2) are in the region of the upper edge of the pane (2) cooperating with a seal and another point (P3) is disposed close to the fashioned part (5) put in place.

10. The vehicle window pane as claimed in claim 8 or 9, **characterized in that** the fashioned part (5) consists of a curable thermoplastic or plastic material.

11. The vehicle window pane as claimed in any one of the claims 8 to 10, **characterized in that**, in the region of the support part (3, 3'), there are provided oriented contact faces (6, 6') of the fashioned part (5), on the two main opposing faces of the pane (2).

12. The vehicle window pane as claimed in any one of the claims 8 to 11, **characterized in that** the support part (3, 3') is provided with a threaded hole or with a threaded stud for assembly to a drive or guide device.

13. The vehicle window pane as claimed in any one of the claims 8 to 12, **characterized in that** the pane (2), the contact face (6, 6') and where necessary the support part (3, 3') are respectively provided with at least one recess (4), the recesses aligned one with the other having, passing through them a bolt or a screw for assembly with a drive or guide device.

## Patentansprüche

1. Verfahren zur Herstellung einer höhenverstellbaren Glasscheibe für Fahrzeuge (1), mit einer transparenten, insbesondere gewölbten Glasscheibe (2), an deren Rand ein Stützteil (3, 3') befestigt werden soll, das mit einer Antriebs- und/oder Führungsvorrichtung für die Höhenverstellung der Scheibe (2) zusammenwirkt, **gekennzeichnet durch** die folgenden Schritte:
- die Glasscheibe (2) wird ausgerichtet und an mehreren vorbestimmten Stellen (P1, P2, P3) ihrer Fläche in einer ihrer Form angepassten Vorrichtung fixiert,
- ein härtbarer Kunststoff wird mit Hilfe wenigstens eines Werkzeugs im Bereich der Verbindung mit dem Stützteil auf die Glasscheibe aufgebracht und wird - in einer festen Position in dem Raum innerhalb der der Form der Glasscheibe angepassten Vorrichtung - zu einem Formteil (5) geformt, das in situ gebildet wird und das nach seinem Verbinden mit der Glasscheibe (2) die Position des Stützteils gegenüber den vorbestimmten Stellen (P1, P2, P3) klar definiert,
- der Kunststoff wird gehärtet,
wobei das Stützteil (3; 3') von wenigstens einem zusätzlichen Teil gebildet ist, das an dem Formteil (5) in einer vorbestimmten Position **durch** wenigstens eine an dieses angeformte Anlagefläche (6; 6') befestigt ist, wobei diese Befestigung ebenfalls in der der Form der Glasscheibe angepassten Vorrichtung vollzogen wird.

2. Verfahren nach Anspruch 1, **dadurch gekennzeichnet, dass** das Formteil ohne Haftung mit der Glasscheibe in Form gebracht und anschließend mit der Glasscheibe an der gleichen Stelle fest verbunden wird.

3. Verfahren nach Anspruch 1, **dadurch gekennzeichnet, dass** das Formteil fest an der Glasscheibe haftend in Form gebracht wird.

4. Verfahren nach Anspruch 1, **dadurch gekennzeichnet, dass** das Stützteil, welches das zusätzliche Teil bildet, als Teil der für die Formgebung des Formteils verwendeten Form verwendet wird, indem das Stützteil für die Formung auf die das Formteil bildende Kunststoffmasse gepresst wird.

5. Verfahren nach Anspruch 1, **dadurch gekennzeichnet, dass** das Stützteil, welches das zusätzliche Teil bildet, als Teil der für die Formgebung des Formteils verwendeten Form verwendet wird, indem es zunächst in einer vorbestimmten räumlichen Position innerhalb der Vorrichtung fixiert wird und indem anschließend ein im Verbindungsbereich zwischen dem angeordneten Stützteil und der Oberfläche der Glasscheibe bestehender Zwischenraum mit der Kunststoffmasse ausgefüllt wird.

6. Verfahren nach einem der vorstehenden Ansprüche, **dadurch gekennzeichnet, dass** das Stützteil mit dem Formteil verklebt wird, entweder mittels eines zusätzlich aufgebrachten Klebstoffs oder durch direkte Haftung zwischen dem Formteil und dem Stützteil.

7. Verfahren nach einem der vorstehenden Ansprüche, **dadurch gekennzeichnet, dass** das Stützteil mit Hilfe mechanischer Verbindungsmittel, insbesondere durch Festklemmen und/oder Einstecken mit dem Formteil verbunden wird.

8. Höhenverstellbare Glasscheibe für Fahrzeuge (1), insbesondere für eine Fahrzeugtür mit einer rahmenlosen Scheibenführung, mit einer transparenten, insbesondere gewölbten Glasscheibe (2), an deren unteren Rand ein Stützteil (3, 3') befestigt ist, das mit einer Antriebs- und/oder Führungsvorrichtung zusammenwirkt, **dadurch gekennzeichnet, dass** die räumliche Position des befestigten Stützteils (3, 3') in Bezug auf die Scheibe (2; 20) mit Hilfe eines an der Glasscheibe in situ ausgebildeten Formteils (5) an mehreren vorbestimmten Stellen (P1, P2, P3), von denen wenigstens zwei an einer Schließkante der Glasscheibe gelegen sind, ausgerichtet ist, und dass das Formteil (5) eine in Bezug auf mehrere vorbestimmte Stellen (P1, P2, P3) ihrer Fläche ausgerichtete Anlagefläche (6, 6') für die Positionierung des Stützteils (3) aufweist.

9. Glasscheibe für Fahrzeuge nach Anspruch 8, **dadurch gekennzeichnet, dass** zwei der vorbestimmten Stellen (P1, P2) sich im Bereich der oberen Kante der Scheibe (2), die mit einem Beschlag zusammenwirkt, befinden und eine weitere Stelle (P3) in der Nähe des angeordneten Formteils (5) gelegen ist.

10. Glasscheibe für Fahrzeuge nach einem der vorstehenden Ansprüche 8 oder 9, **dadurch gekennzeichnet, dass** das Formteil (5) aus einem härtbaren oder thermoplastischen Kunststoff besteht.

11. Glasscheibe für Fahrzeuge nach einem der vorstehenden Ansprüche 8 bis 10, **dadurch gekennzeichnet, dass** im Bereich des Stützteils (3, 3') ausgerichtete Anlageflächen (6, 6') des Formteils (5), an den beiden gegenüber liegenden Hauptseiten der Scheibe (2) vorgesehen sind.

12. Glasscheibe für Fahrzeuge nach einem der vorstehenden Ansprüche 8 bis 11, **dadurch gekennzeichnet, dass** das Stützteil (3, 3') mit einer Gewindebohrung oder einem Gewindeschaft für die Verbindung mit einer Antriebs- oder Führungsanordnung versehen ist.

13. Glasscheibe für Fahrzeuge nach einem der vorstehenden Ansprüche 8 bis 12, **dadurch gekennzeichnet, dass** die Glasscheibe (2), die Anlagefläche (6, 6') und eventuell das Stützteil (3, 3') jeweils mit wenigstens einer Ausnehmung (4) versehen sind, wobei die miteinander fluchtenden Ausnehmungen von einem Bolzen oder einer Schraube für die Verbindung mit einer Antriebs- oder Führungsvorrichtung durchgriffen sind.
